# EUROPEAN PATENT SPECIFICATION

(11) **EP 1 814 141 B1**
(45) Date of publication and mention of the grant of the patent: **21.04.2010**
(21) Application number: 06126481.8
(22) Date of filing: 19.12.2006
(51) Int. Cl.: H01J 63/02, H01J 3/02, G02F 1/13357

(54) **Electron emission device, backlight unit (BLU) including the electron emission device, flat display apparatus including the BLU, and method of driving the electron emission device**
Elektronenemissionsvorrichtung, Hintergrundbeleuchtungseinheit (BLU) mit Elektronenemissionsvorrichtung, Flachbildschirm mit BLU und Ansteuerungsverfahren für die Elektronenemissionsvorrichtung
Dispositif émettant des électrons, unité de rétroéclairage (BLU) dotée du dispositif émettant des électrons, appareil à écran plat doté de la BLU et procédé pour entraîner le dispositif émetteur

(30) Priority: 29.12.2005 KR 20050133417
(43) Date of publication of application: 01.08.2007
(73) Proprietor: Samsung SDI Co., Ltd., Suwon-si Gyeonggi-do (KR)
(72) Inventor: Cho, Young-Suk, c/o Samsung SDI Co., Ltd., Suwon-si, Gyeonggi-do (KR); Bae, Jae-Woo, c/o Samsung SDI Co., Ltd., Suwon-si, Gyeonggi-do (KR); Kang, Dong-Hyun, c/o Samsung SDI Co., Ltd., Suwon-si, Gyeonggi-do (KR); Joo, Kyu-Nam, c/o Samsung SDI Co., Ltd., Suwon-si, Gyeonggi-do (KR); Do, Ui-Song, Seoul 137-875 (KR); Lim, Ik-Chul, c/o Samsung SDI Co., Ltd., Suwon-si, Gyeonggi-do (KR); Zang, Dong-Sik, c/o Samsung SDI Co., Ltd., Suwon-si, Gyeonggi-do (KR); Choi, Yong-Soo, Seoul 137-875 (KR); Son, Kyoung-Cheon, c/o Samsung SDI Co., Ltd., Suwon-si, Gyeonggi-do (KR)
(74) Representative: Hengelhaupt, Jürgen

(56) References cited:
- EP-A2- 1 569 258
- US-A- 5 982 091
- US-A1- 2005 152 155
- US-A1- 2005 174 028
- US-A1- 2005 184 634

## Description

### BACKGROUND OF THE INVENTION

### Field of the Invention

The present invention relates to an electron emission device, a backlight unit (BLU) including the electron emission device, a flat display apparatus including the BLU, and a method of driving the electron emission device. More particularly, the present invention relates to an electron emission device having a high electron emission efficiency and luminous uniformity, a BLU including the electron emission device, a flat display apparatus including the BLU, and a method of driving the electron emission device.

### Description of the Related Art

Generally, electron emission devices use a thermal cathode or a cold cathode as an electron emission source. Electron emission devices that use a cold cathode as an electron emission source include Field Emitter Array (FEA) devices, Surface Conduction Emitter (SCE) devices, Metal-Insulator-Metal (MIM) devices, Metal-Insulator-Semiconductor (MIS) devices, Ballistic electron Surface Emitting (BSE) devices, etc. The present invention relates to an FEA device.

An FEA electron emission device uses the principle that when a material having a low work function or a high β function is used as an electron emission source, the material readily emits electrons in a vacuum when an electrical potential is supplied thereto. FEA devices that employ a tapered tip structure formed of, for example, Mo, Si as a main component, a carbon group material such as graphite, Diamond like Carbon (DLC), etc., or a nano structure such as nanotubes, nano wires, etc., have been developed.

FEA electron emission devices can be classified into top gate devices and under gate devices according to the arrangement of a cathode and a gate electrode. FEA electron emission devices can also be classified into two-electrode, three-electrode, and four-electrode devices according to the number of electrodes included.

Examples of electron emission devices of the prior art are disclosed in US 2005/174028 A1, US-A-5,982,091 and US 2005/152155 A1.

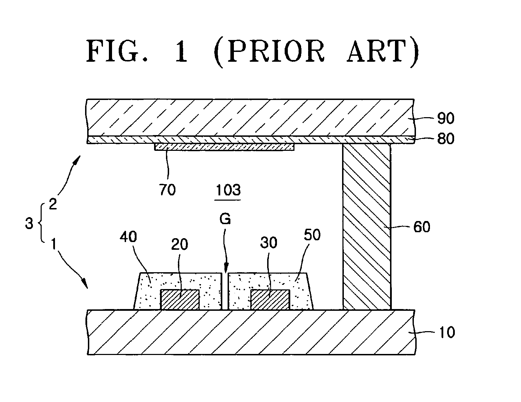

FIG. 1 is a schematic cross-sectional view of a conventional FEA electron emission device 1.

Referring to FIG. 1, the FEA electron emission device 1 includes a base substrate 10, a cathode 20 formed in stripes on the base substrate 10, a gate electrode 30 formed in stripes on the base substrate 10 and parallel to the cathode 20, and electron emission sources 40 and 50 covering the cathode 20 and the gate electrode 30. An electron emission gap G is formed between the electron emission layers 40 and 50 surrounding the cathode 20 and the gate electrode 30.

A front panel 2 is disposed on a front surface of the electron emission device 1. The front panel 2 includes a front substrate 90, an anode 80 formed on a lower surface of the front substrate 90, and a phosphor layer 70 coated on the anode 80. The electron emission device 1 and the front panel 2 form a surface light source or a display device 3.

The pressure in the space between the front panel 2 and the electron emission device 1 is kept lower than the air pressure, and a spacer 60 is interposed between the electron emission device 1 and the front panel 2 to support the pressure generated between the electron emission device 1 and the front panel 2 and to secure a light emitting space 103.

In the above described electron emission device 1, electrons are emitted from the electron emission source 40 formed on the cathode 20 by an electric field between the gate electrode 30 and the cathode 20, and the initially emitted electrons travel toward the gate electrode 30, but are finally pulled toward the anode 80 by a strong electric field between the anode 80 and the cathode 20.

That is, the electric field between the anode 80 and the cathode 20 is much greater than the electric field between the gate electrode 30 and the cathode 20, and thus a diode discharge can occur.

Due to the light emission characteristics of phosphor materials, when light is emitted by an electron that is incident on a phosphor material, other incident electrons cannot contribute to light emission. Thus, the light emission efficiency is not improved by increasing the number of electrons incident on the phosphor layer, and the electron emission through the use of a high anode voltage is rather undesirable from an energy efficiency aspect. In other words, electrons should be emitted stably and efficiently using a low gate voltage while uniformly accelerating the emitted electrons. However, when electrons are emitted using a strong anode voltage, such an efficient electron emission and light emission becomes impossible. Thus, an electron emission device with a new structure which can block an electric field between the anode 80 and the cathode 20 is required.

### SUMMARY OF THE INVENTION

The present invention provides an electron emission device which can effectively block an electric field generated by an anode, consistently and stably emit electrons at a low gate voltage, and provide a high luminous uniformity and luminous efficiency.

The present invention also provides a flat display apparatus using the electron emission device as a backlight unit (BLU).

According to one aspect of the present invention, an electron emission device is provided as defined in the claims including: a base substrate; at least one first electrode each including a first main electrode portion arranged on a surface of the base substrate and extending in a predetermined direction and a first auxiliary electrode extending from the first main electrode portion; at least one second electrode each including a second main electrode portion arranged on the surface of the base substrate and separated from the first electrode and extending in a predetermined direction and a second auxiliary electrode extending from the second main electrode portion; and an electron emission source arranged on at least one of the first and second electrodes, wherein the first and second auxiliary electrodes each have a spiral pattern in which a radius of curvature of the first and second auxiliary electrodes are gradually reduced or the first and second auxiliary electrodes each have a bent pattern in which lengths of sides of each of the first and second auxiliary electrodes are gradually reduced and wherein a constant distance is maintained between the first and second auxiliary electrodes.

The first and second auxiliary electrodes are respectively preferably arranged on at least a portion of the first and second electrodes and block an external electric field from affecting an electric field between the first and second electrodes. The first and second auxiliary electrodes are respectively preferably arranged on all of the first and second electrodes. The first and second auxiliary electrodes are preferably thicker than the first and second electrodes.

The electron emission device preferably further includes an insulating layer interposed between the first and second auxiliary electrodes and portions of the first and second electrodes on which the first and second auxiliary electrodes are respectively arranged.

The first and second auxiliary electrodes each preferably have a right-angled pattern in which adjacent sides of each of the first and second auxiliary electrodes are perpendicular to each other.

A shortest distance between the first main electrode portion and the second auxiliary electrode is preferably equal to a distance between the first and second auxiliary electrodes.

A shortest distance between the second main electrode portion and the first auxiliary electrode is preferably equal to a distance between the first and second auxiliary electrodes.

The electron emission source is preferably disposed on only a portion of either the first or second electrodes.

The first and second electrodes preferably have surfaces facing each other and wherein the electron emission source is disposed on one of the surfaces of the first and second electrodes facing each other.

A distance between either an end of the electron emission source on one of the first and second electrodes and the other of the first and second electrodes or another electron emission source which faces and is separated from the electron emission source is preferably in a range of 1.0 nm to 0.01 µm.

A portion of the base substrate occupied by the electron emission source is preferably in a range of 0.0001 to 50.0% of a portion of the base substrate occupied by the first and occupied by the first and second electrodes and a space between the first and second electrodes.

According to another aspect of the present invention, a backlight unit (BLU) is provided as defined in the claims including an electron emission device of the invention.

The first main electrode portions and the second main electrode portions of the electron emission device of the BLU are preferably arranged alternately and parallel to each other on the base substrate, the first auxiliary electrodes preferably extend from one side of each of the first main electrode portions, and the second auxiliary electrodes preferably extend from one side of each of the second main electrode portions.

The first main electrode portions and the second main electrode portions of the electron emission device of the BLU are preferably arranged alternately and parallel to each other on the base substrate, the first auxiliary electrodes preferably extend from both sides of the first main electrode portions, and the second auxiliary electrodes preferably extend from both sides of the first main electrode portions.

The BLU preferably further includes: a front substrate arranged parallel to the base substrate and an anode arranged behind the front substrate to accelerate electrons emitted from the electron emission source toward the phosphor layer.

According to still another aspect of the present invention, a flat display apparatus is provided as defined in the claims including a backlight unit (BLU) of the invention and a display panel including a light receiving/generating device arranged in front of the BLU and displaying an image by controlling light supplied from the BLU.

The light receiving/generating device preferably includes a liquid crystal device.

According to yet another aspect of the present invention, a method of driving an electron emission device of the invention including a first electrode, a second electrode separated from the first electrode, and an electron emission source arranged on the first and second electrodes is provided, the method including: alternately supplying positive and negative voltages to the first and second electrodes by: supplying the negative voltage to one of the first and second electrodes for a predetermined period of time while supplying the positive voltage to the other of the first and second electrodes for the predetermined period of time; and supplying the positive voltage to the one of the first and second electrodes for a predetermined period of time while supplying the negative voltage to the other of the first and second electrodes; the first and second electrodes alternately function as a cathode of the electron emission device.

### BRIEF DESCRIPTION OF THE DRAWINGS

A more complete appreciation of the present invention and many of the attendant advantages thereof, will be readily apparent as the present invention becomes better understood by reference to the following detailed description when considered in conjunction with the accompanying drawings in which like reference symbols indicate the same or similar components, wherein:
FIG. 1 is a cross-sectional view of a conventional Field Emitter Array (FEA) electron emission device;
FIG. 2 is a perspective view of an electron emission device according to a first embodiment of the present invention;
FIG. 3 is a plan view of the electron emission device of FIG. 2;
FIG. 4 is a perspective view of an electron emission device according to a second embodiment of the present invention;
FIG. 5 is a plan view of the electron emission device of FIG. 4;
FIGS. 6 through 15 are views of modified versions of the electron emission device of FIG. 3 or FIG. 4;
FIG. 16 is a timing diagram relating to a method of driving an electron emission device according to an embodiment of the present invention;
FIG. 17 is an exploded perspective view of a flat display apparatus including a backlight unit (BLU) having the electron emission device of FIG. 2 according to an embodiment of the present invention;
FIG. 18 is a plan view of a rear panel of the BLU of FIG. 17 according to an embodiment of the present invention;
FIG. 19 is a plan view of a rear panel according to another embodiment of the present invention; and
FIG. 20 is a cross-sectional view of the flat display apparatus taken along line XX-XX of FIG. 17.

### DETAILED DESCRIPTION OF THE INVENTION

The present invention is described more fully below with reference to the accompanying drawings, in which exemplary embodiments of the present invention are shown. The present invention can, however, be embodied in many different forms and should not be construed as being limited to the embodiments set forth therein; rather, these embodiments are provided so that this disclosure will be thorough and complete, and will fully convey the concept of the present invention to those skilled in the art. Like reference numerals in the drawings denote like elements.

### First Embodiment

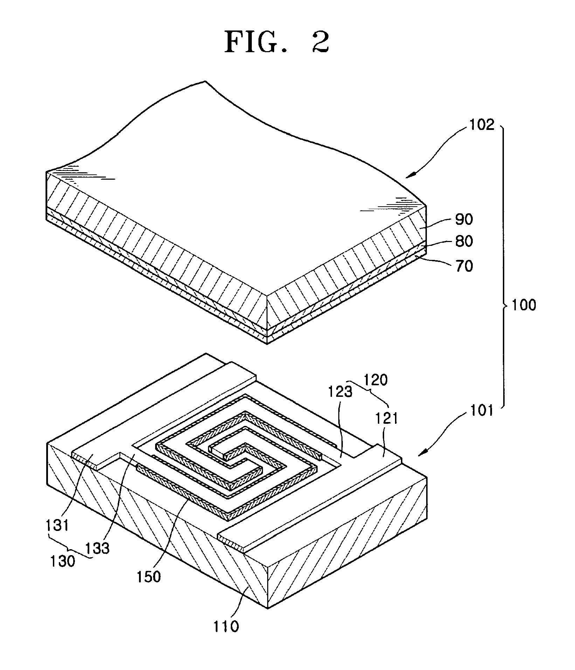

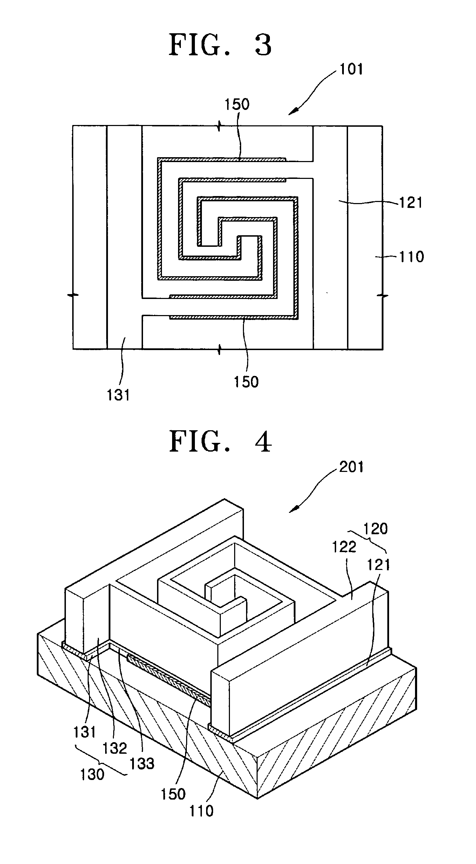

FIG. 2 is a perspective view of an electron emission device 101 according to a first embodiment of the present invention. FIG. 3 is a plan view of the electron emission device 101 of FIG. 2.

Referring to FIGS. 2 and 3, the electron emission device 101 according to the first embodiment of the present invention includes a base substrate 110, a first electrode 120, a second electrode 130, and an electron emission source 150.

The base substrate 110 is a board member having a predetermined thickness, or a glass substrate formed of quartz glass, glass containing a small amount of an impurity such as Na, plate glass, or glass coated with SiO₂, aluminum oxide, or a ceramic. If a flexible display apparatus is to be implemented, the base substrate 210 can be formed of a flexible material.

The first electrode 120 includes a first main electrode portion 121 which extends in one direction on the base substrate 110 and a first auxiliary electrode portion 123 which is formed in a predetermined pattern and is electrically connected to a side of the first main electrode portion 121.

The second electrode 130 includes a second main electrode portion 131 which is parallel to the first main electrode portion of the first electrode 120, and a second auxiliary electrode portion 133 which is formed in a predetermined pattern and is electrically connected to a side of the second main electrode portion 131.

The first and second auxiliary electrode portions 123 and 133 are shaped such that the ratios of their areas facing each other to their lengths can be maximized. For example, the edge lengths of the first and second auxiliary electrode portions 123 and 133 can become gradually shorter and can be bent at a predetermined angle in one direction as illustrated in FIGS. 2 and 3. In FIGS. 2 and 3, the first and second auxiliary electrode portions 123 and 133 are bent at 90-degree angles. However, the first and second auxiliary electrode portions 123 and 133 can be bent at various angles such that they can be polygonally shaped. Alternatively, the first and second auxiliary electrode portions 123 and 133 can be shaped like spirals whose radii of curvature are gradually reduced.

The first and second auxiliary electrode portions 123 and 133 can have substantially identical shapes, and a substantially constant distance can be maintained between the first and second auxiliary electrode portions 123 and 133.

The first and second electrodes 120 and 130 can be formed of a common electrically conductive material, for example, a metal such as Al, Ti, Cr, Ni, Au, Ag, Mo, W, Pt, Cu, Pd, etc. or an alloy of such a metal, a printed conductive material made by mixing glass with a metal such as Pd, Ag, RuO₂, Pd-Ag, etc. or a metal oxide of such a metal, a transparent conductive material such as ITO, In₂O₃, SnO₂, or the like, or a semiconductor material such as polycrystalline silicon or the like.

The electron emission source 150 is disposed on sides of portions of the first and second electrodes 120 and 130 facing each other. The electron emission source 150 can be disposed on either one or both of the first and second electrodes 120 and 130. In particular, the electron emission source 150 can be disposed on the sides of the first and second auxiliary electrode portions 123 and 133 having large facing areas. In addition, the electron emission source 150 can be disposed on surfaces of the first main electrode portion 121 and the second auxiliary electrode portion 133 facing each other and/or surfaces of the second main electrode portion 131 and the first auxiliary electrode portion 123 facing each other. The electron emission source 150 can also be disposed at other positions not discussed herein.

The electron emission source 150 can be formed of a carbon-based material or a nano material having a low work function and a high β function. A carbon-based material includes Carbon Nano Tubes (CNTs), graphite, diamonds, or diamond-like carbon. A nano material includes nano tubes, nano wires, or nano rods. Particularly, CNTs are easily driven at a low voltage since CNTs have a superior electron emission characteristic. Therefore, CNTs are suitable for a large screen display device.

The electron emission device 101 according to the first embodiment of the present invention supplies a negative voltage to one of the first electrode 120 and the second electrode 130 and supplies a positive voltage to the other one of the first electrode 120 and the second electrode 130 such that electrons are emitted from the electron emission source 150 due to an electric field between the first electrode 120 and the second electrode 130.

The electron emission device 101 can be used in an electron emission display device 100 that realizes an image by generating visible light. The electron emission display device 100 further includes a phosphor layer 70 in front of the electron emission device 101. A front panel 102 includes the phosphor layer 70, an anode 80 which accelerates electrons toward the phosphor layer 70 and a front substrate 90 which supports the anode 80 and the phosphor layer 70.

Like the base substrate 110, the front substrate 90 is a board member having a predetermined thickness. The base substrate 110 and the front substrate 90 can be formed of identical materials. Like the first electrode 120 and the second electrode 130, the anode 80 can be formed of a common electrically conductive material.

The phosphor layer 70 is formed of a Cathode Luminescence (CL) phosphor that is excited by electrons and releases visible light. Phosphors that can be used for the phosphor layer 70 include a red phosphor such as "SrTiO₃:Pr," "Y₂O₃:Eu" or "Y₂O₃S:Eu," a green phosphor such as "Zn(Ga, Al)₂O₄:Mn," "Y₃(Al, Ga)₅O₁₂:Tb," "Y₂SiO⁵:Tb" or "ZnS:Cu, AI," and a blue phosphor such as "Y₂SiO₅:Ce," "ZnGa₂O₄" or "ZnS:Ag, CI." The phosphor layer 70 can be formed of a material other than a phosphor.

The electron emission device 101 that includes the base substrate 110 and the front panel 102 that includes the front substrate 90 are separated a predetermined distance apart and face each other to form a light emission space 103. A plurality of spacers 60 like those illustrated in FIG. 1 are formed between the electron emission device 101 and the front panel 102 to maintain a gap therebetween. The spacers 60 can be formed of an insulating material.

Also, to form a vacuum within the light emission space 103, the perimeter of the space formed by the electron emission device 101 and the front panel 102 is sealed using glass frit (not shown), and air in the space is exhausted.

The operation of the electron emission display device 100 is as follows.

The electron emission display device 100 supplies a negative voltage to one of the first electrode 120 and the second electrode 130 and a positive voltage to the other of the first electrode 120 and the second electrode 130 such that electrons are emitted from the electron emission source 150 disposed on the first electrode 120 and/or the second electrode 130. When a strong positive voltage is supplied to the anode 80, electrons are emitted from the carbon-based material or the nanomaterial of the electron emission source 150 and accelerated toward the anode 80. The electrons accelerated toward the anode 80 generate visible light by exciting the phosphor 70 disposed on the anode 80.

### Second Embodiment

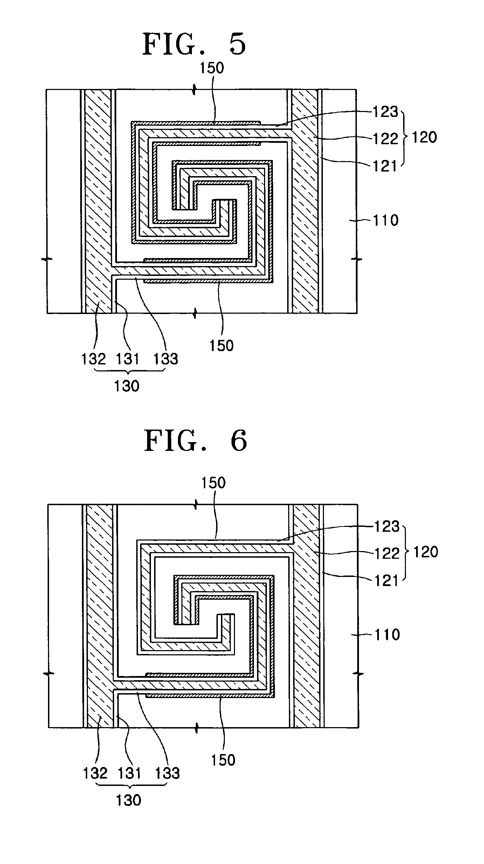

FIG. 4 is a perspective view of an electron emission device 201 according to a second embodiment of the present invention. FIG. 5 is a plan view of the electron emission device 201 of FIG. 4.

Referring to FIGS. 4 and 5, the electron emission device 201 according to the second embodiment of the present invention has the same structure as the electron emission device 101 according to the first embodiment described above, but further includes auxiliary electrodes 122 and 132 on the first and second electrodes 120 and 130. The auxiliary electrodes 122 and 132 can be insulated from the first and second electrodes 120 and 130 by a separate insulating layer or can be electrically connected to the first and second electrodes 120 and 130. Like the first and second electrodes 120 and 130, the auxiliary electrodes 122 and 132 are formed of conductive materials. However, it is not necessary for the auxiliary electrodes 122 and 132 to be formed of the same materials as the first and second electrodes 120 and 130.

When the auxiliary electrodes 122 and 132 are added to the electron emission device 101, the following effects are obtained.

To implement the electron emission display device 100 of FIG. 2 or a backlight unit (BLU), the phosphor layer 70 is formed in front of the electron emission device 101. To facilitate the acceleration of electrons emitted from the electron emission device 101 toward the phosphor 70, the anode 80 which contacts the phosphor layer 70 and a neighboring area having a strong negative voltage supplied thereto is included. When an electric field created by the anode 80 interferes with the electric field between the first and second electrodes 120 and 130, electrons are not emitted between the first and second electrodes 120 and 130. Instead, a diode discharge in which electrons are emitted from the electron emission device 101 due to the electric field between the anode 80 and the first electrode 120 or the second electrode 130 occurs. When the diode discharge occurs, the flow of electrons emitted from the electron emission device 101 cannot be controlled. Therefore, it is desirable to avoid the diode discharge, which is why the auxiliary electrodes 122 and 132 are included. The auxiliary electrodes 122 and 132 prevent the electric field created by the anode 80 from interfering with the electric field between the first and second electrodes 120 and 130. Therefore, when the auxiliary electrodes 122 and 132 are installed, the diode discharge can be avoided. Accordingly, since the flow of electrons emitted from the electron emission device 101 can be controlled, the phosphor layer 70 can be efficiently excited, thereby enhancing luminous efficiency.

In FIGS. 4 and 5, the auxiliary electrodes 122 and 132 are formed on all of the first main electrode portion 121 and the first auxiliary electrode portion 123 of the first electrode 120 and the second main electrode portion 131 and the second auxiliary electrode portion 133 of the second electrode 130. However, the auxiliary electrodes 122 and 132 can be formed on portions thereof, as will be described below.

### Modifications of First and Second Embodiments

FIGS. 6 through 15 are views of modified versions of the electron emission device 101 of FIG. 3 according to the first embodiment of the present invention and the electron emission device 201 of FIGS. 4 an 5 according to the second embodiment of the present invention.

In FIG. 6, unlike in the electron emission device 201 of FIG. 5 according to the second embodiment of the present invention, an electron emission source 150 is disposed on a second electrode 130 only. In this regard, electrons are emitted from the electron emission source 150 disposed on one of a first electrode 120 and a second electrode 130 to which a negative voltage is supplied, and therefore, the electron emission source 150 need not be disposed on both of the first and second electrodes 120 and 130, and it can be more efficient to form the electron emission source 150 on only one electrode, for example, the second electrode 130 as illustrated in FIG. 6.

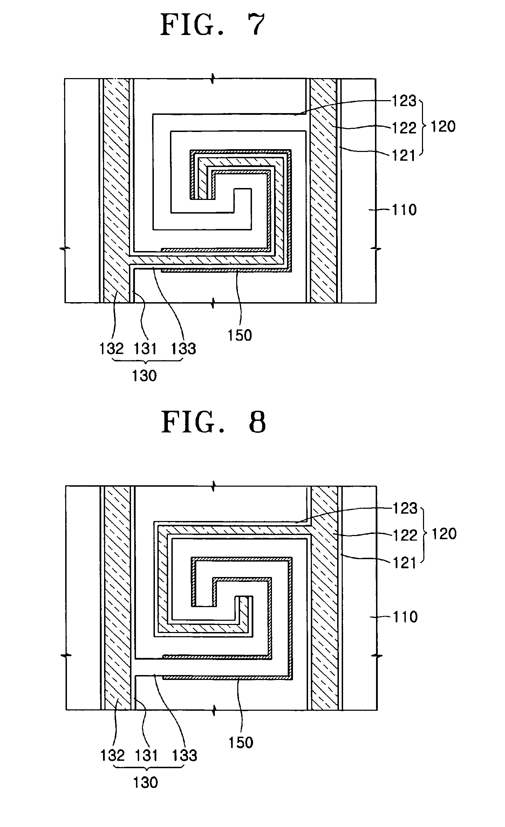

Referring to FIGS. 7 and 8, auxiliary electrodes 122 and 132 can be formed on one of first and second main electrode portions 121 and 131 or on one of first and second auxiliary electrode portions 123 and 133. In addition, an electron emission source 150 can be disposed on the second auxiliary electrode portion 133 (FIG. 7) with the auxiliary electrode 132 or on the second auxiliary electrode portion 133 (FIG. 8) without the auxiliary electrode 132.

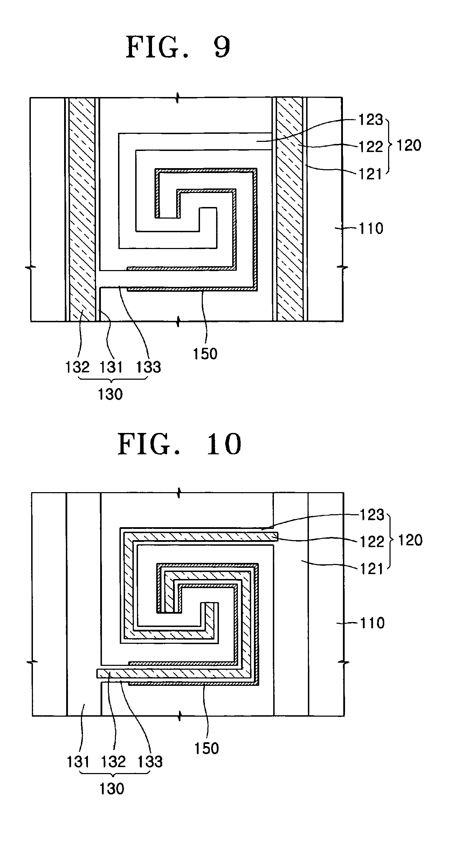

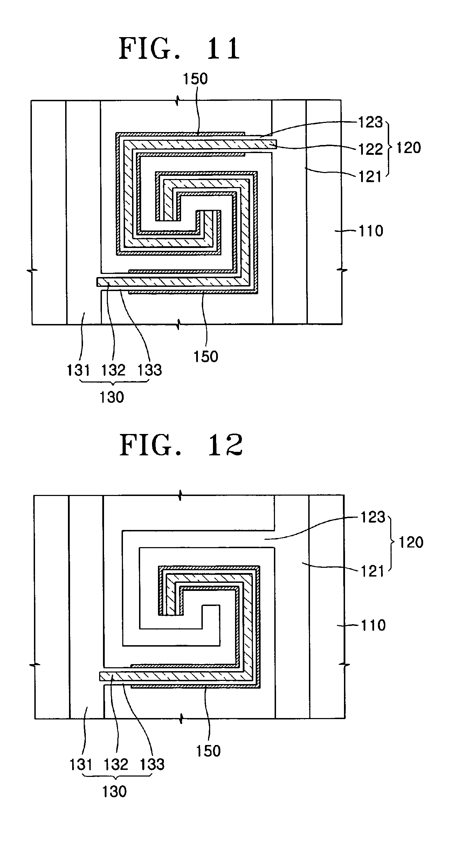

Referring to FIG. 9, auxiliary electrodes 122 and 132 can be formed on a first main electrode portion 121 of a first electrode 120 and a second auxiliary electrode portion 131 of a second electrode 130. Referring to FIGS. 10 and 11, auxiliary electrodes 122 and 132 can be formed on a first auxiliary electrode portion 123 of a first electrode 120 and a second auxiliary electrode portion 133 of a second electrode 130. In addition, an electron emission source 150 can be disposed on at least one of the auxiliary electrode portions of the first and second electrodes 120 and 130, for example, on the second auxiliary electrode portion 133 of the second electrode 130 (FIG. 10) or on both the first and second auxiliary electrode portion 123 and 133 of the first and second electrodes 120 and 130 (FIG. 11).

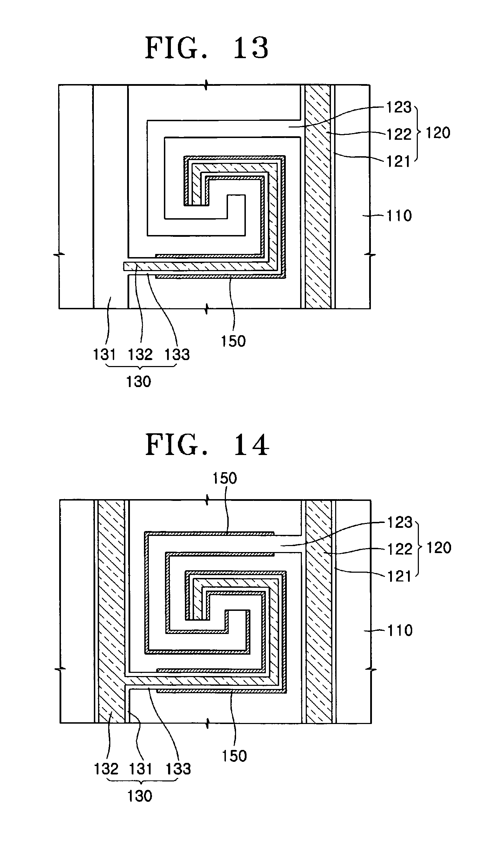

Referring to FIG. 12, an electron emission source 150 and an auxiliary electrode 132 can be disposed on one of first and second auxiliary electrode portions 123 and 133 of first and second electrodes 120 and 130, for example, the second auxiliary electrode portion 133 of the second electrode 130. Alternatively, referring to FIG. 13, an electron emission source 150 and an auxiliary electrode 132 can be formed on one of first and second auxiliary electrode portion 123 and 133 of one of first and second electrodes 120 and 130, for example, the second auxiliary electrode portion 133 of the second electrode 130. In addition, an auxiliary electrode 122 can be disposed on one of first and second main electrode portions of the other of the first and second electrodes 120 and 130, for example, the first main electrode portion 121 of the first electrode 120. Alternatively, referring to FIG. 14, auxiliary electrodes 122 and 132 can be formed on first and second main electrode portions 121 and 131 of first and second electrodes 120 and 130 and one of first and second auxiliary electrode portions 123 and 133 of the first and second electrodes 120 and 130, for example, the second auxiliary electrode portion 133 of the second electrode 130. In addition, an electron emission source 150 can be disposed on both the first and second electrodes 120 and 130.

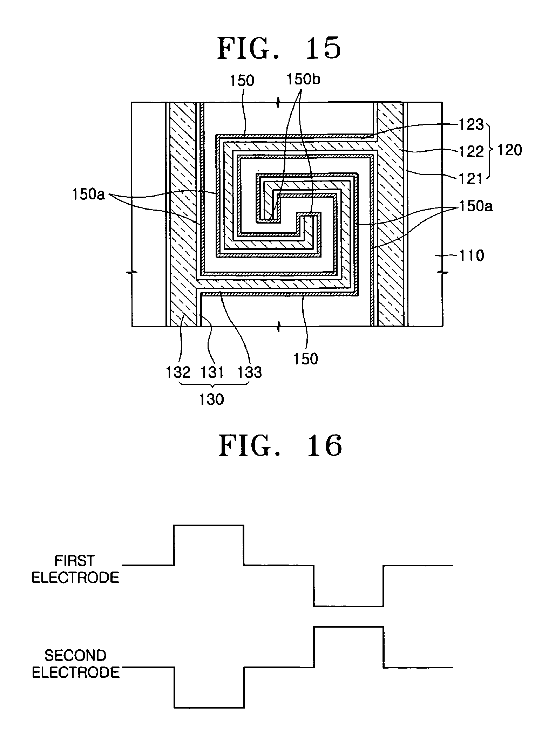

Referring to FIG. 15, auxiliary electrodes 122 and 132 can be formed on entire first and second electrodes 120 and 130, and an electron emission source 150 can be formed on all of the surfaces of the first and second electrodes 120 and 130 facing each other. In other words, the electron emission source 150 is formed on surfaces 150a of a first auxiliary electrode portion 123 of the first electrode 120 and a second main electrode portion 131 of the second electrode 130 facing each other and surfaces 150a of a second auxiliary electrode portion 133 of the second electrode 130 and a first main electrode portion 121 of the first electrode 120. Since equal voltages are respectively supplied to the first and second main electrode portions 121 and 131 and the first and second auxiliary electrode portions 123 and 133 of the first and second electrodes 120 and 130, the current density can be effectively increased. As described above, in embodiments of the present invention, auxiliary electrodes can be disposed in various positions. The electron emission source 150 can be formed on one of the first and second electrodes 120 and 130. In addition, the electron emission source 150 can be formed on ends 150b of the first and second auxiliary electrode portions 123 and 133.

A driving method which can be applied to the first and second embodiments and the various modified versions and which can reduce power consumption and increase the lifespan of an electron emission source is described below with reference to FIG. 16.

For example, when electron emission sources are formed on both of the first and second electrodes as illustrated in FIGS. 5, 11, 14, and 15, the electrode to which a positive voltage will be supplied and the electrode to which a negative voltage will be supplied can be determined freely. In this case, the positive and negative voltages can be alternately supplied to the first and second electrodes as illustrated in FIG. 16. When such a driving method is used, the electron emission sources formed on both the first and second electrodes alternately emit electrons. Furthermore, the lifespan of the electron emission sources can be doubled compared to when only one electrode is used as a cathode.

For the electron emission devices 101 and 201 according to the first and second embodiments of the present invention and the electron emission devices in the various modified versions to emit electrons, the distance between an end of the electron emission source 150 and another electrode or another electron emission source which faces the electron emission source 150 can be maintained at 1.0 nm to 0.01 µm. In addition, the electron emission source 150 can occupy 0.0001 to 50.0% of the portion of the base substrate 110 that the first and second electrodes 120 and 130 occupy to secure effective electron emission sources.

### Embodiments of a BLU and a Flat Display Apparatus

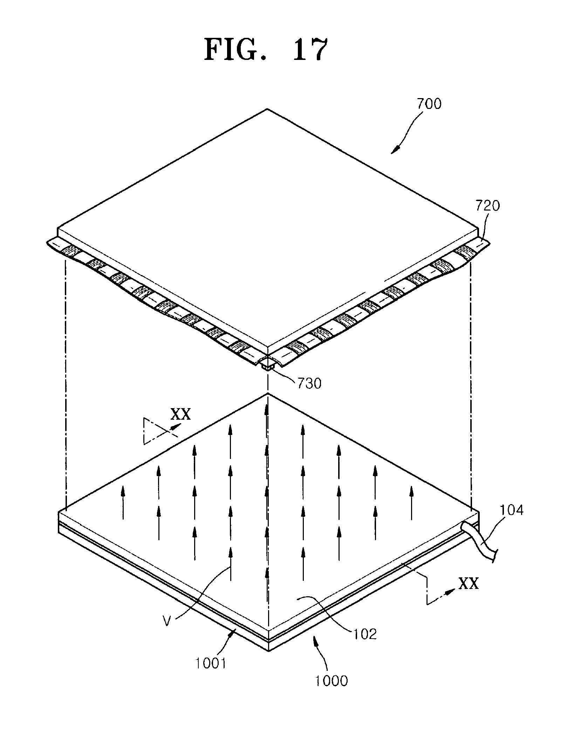

FIG. 17 is an exploded perspective view of a flat display apparatus including a BLU 1000 having the electron emission device 101 of FIG. 2 according to an embodiment of the present invention.

Referring to FIG. 17, the flat display apparatus includes a Liquid Crystal Display (LCD) panel 700 as a light receiving/generating display panel and the BLU 1000 which supplies light to the LCD panel 700. A Flexible Printed Circuit Board (FPCB) 720 that transmits an image signal is attached to the LCD 700, and a spacer 730 that maintains a gap between the LCD panel 700 and the BLU 1000 is disposed at the back of the LCD panel 700.

The BLU 1000 includes a rear panel 1001 which includes the electron emission device 101 of FIG. 2 and a front panel 102 which is disposed in front of the rear panel 1001 and includes a phosphor layer. The BLU 1000 is supplied with power through a connection cable 104 and enables electrons to be emitted from the electron emission device 101 included in the rear panel 1001 toward the front panel 102 disposed in front of the rear panel 1001. Then, the phosphor layer included in the front panel 102 is excited by the emitted electrons and generates visible light V. The generated visible light V is supplied to the LCD panel 700, and the LCD panel 700 displays an image by controlling the transmission of the visible light V

The front panel 102 can include a front substrate, which is a board member of a predetermined size, the phosphor layer disposed on the front substrate, and an anode which accelerates electrons toward the phosphor.

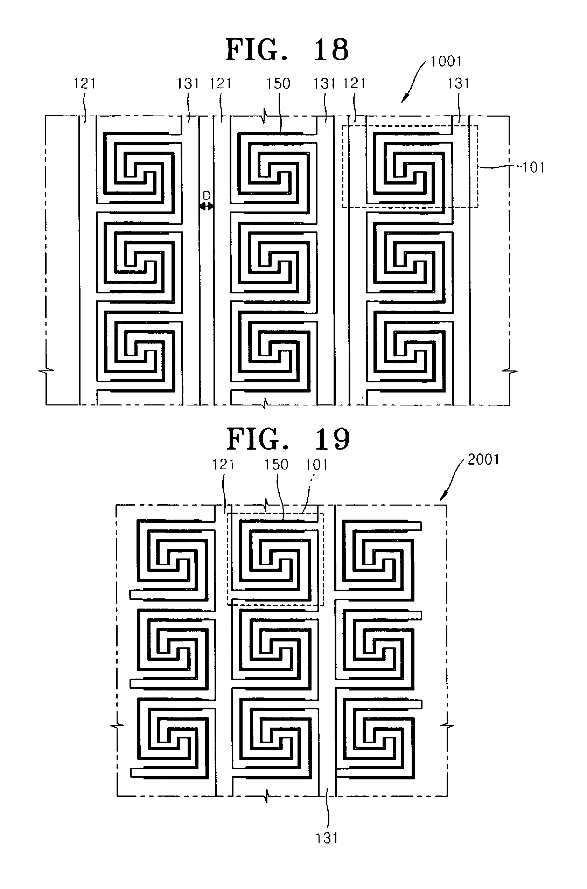

FIG. 18 is a plan view of the rear panel 1001 of the BLU 1000 of FIG. 17 according to an embodiment of the present invention. FIG. 19 is a plan view of a rear panel 2001 according to another embodiment of the present invention.

Referring to FIG. 18, a plurality of electron emission devices according to an embodiment of the present invention are adjacently arranged on the rear panel 1001. The electron emission devices can be vertically and horizontally arranged in a checkered pattern. In other words, the electron emission devices can extend in a direction (a vertical direction in FIG. 18) and be arranged adjacently such that the first and second main electrode portions 121 and 131 of adjacent electron emission devices are adjacent. In addition, the second main electrode portion 131 of the second electrode 130 of an electron emission device and the first main electrode portion 121 of the first electrode 120 of a horizontally adjacent electron emission device can be disposed parallel to each other. This arrangement allows for the electron emission devices to be arranged in the checkered pattern on the base substrate 110.

When the rear panel 1001 is configured as illustrated in FIG. 18, although not shown in the drawings, the electron emission sources 150 can be formed on surfaces of main electrode portions facing each other, that is, surfaces between which gaps D exist. Therefore, the number of effective electron emission sources 150 that can emit electrons can be significantly increased.

Referring to FIG. 19, in each of a plurality of electron emission devices arranged adjacently on the rear panel 2001, auxiliary electrode portions extend from a main electrode portion. A substantially equal distance is maintained between the main electrode portions, and different voltages are alternately supplied to the main electrode portions. In this case, more auxiliary electrodes, which actually contribute to the emission of electrons, can be formed on the base substrate 110. Comparing FIG. 18 with FIG. 19, the number of areas in which auxiliary electrode portions disposed opposite to each other is nine, but a horizontal length of the area occupied by the same number of the auxiliary electrode portions is significantly reduced in FIG. 19.

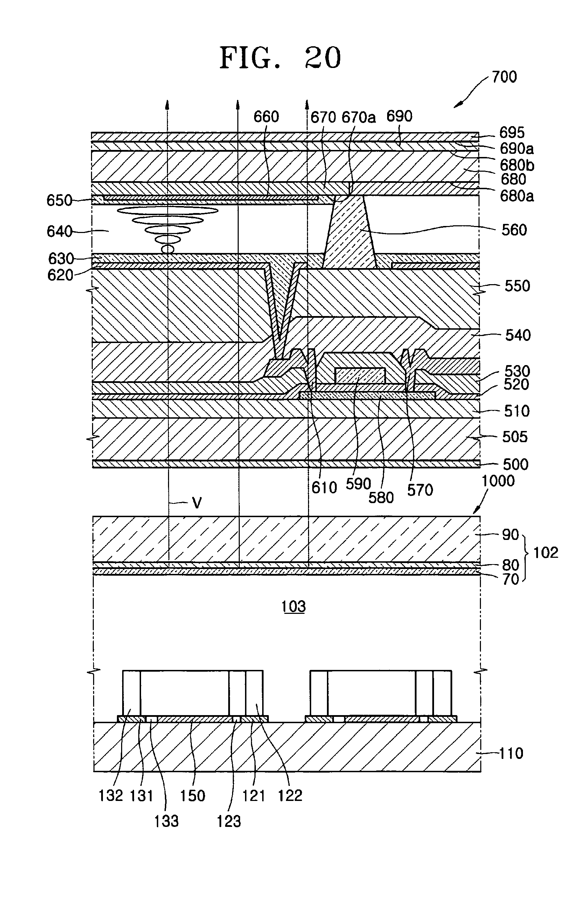

FIG. 20 is a schematic cross-sectional view of the flat display apparatus taken along line XX-XX of FIG. 17.

The configuration and operation of an LCD apparatus, which is an example of the flat display apparatus according to an embodiment of the present invention, is described as follows with reference to FIG. 20. Identical terms will be used to indicate identical elements, such as first and second electrodes and a spacer, in describing the LCD apparatus. Whether such elements are included in the LCD apparatus or a BLU are clearly identified by reference numerals.

The electron emission device illustrated in FIG. 20 can be any one of the electron emission devices described above. Referring to FIG. 20, the BLU 1000 includes the electron emission device and the front panel 102 coupled to the electron emission device with a predetermined gap there between. Since the configurations of the electron emission device and the front panel 102 are identical to those of the electron emission device and the BLU described above, a detailed description thereof has not been repeated. Electrons are emitted due to the electric field between the first and second electrodes 120 and 130 included in the electron emission device. Then, the emitted electrons are accelerated by the electric field created by the anode 80, which is disposed on the front panel 102. The accelerated electrons excite the phosphor layer 70, which, in turn, generates the visible light V. The generated visible light V proceeds toward the LCD panel 700 in front of the BLU 1000.

The LCD panel 700 includes a first substrate 505. A buffer layer 510 is formed on the first substrate 505, and a semiconductor layer 580 is formed in a predetermined pattern on the buffer layer 510. A first insulating layer 520 is formed on the semiconductor layer 580, a gate electrode 590 is formed in a predetermined pattern on the first insulating layer 520, and a second insulating layer 530 is formed on the gate electrode 590. After the second insulating layer 530 is formed, the first and second insulating layers 520 and 530 are etched through an etching process such as a dry-etching process, thereby exposing a portion of the semiconductor layer 580. A source electrode 570 and a drain electrode 610 are formed above and extend down to the exposed portion of the semiconductor layer 580. After the source electrode 570 and the drain electrode 610 are formed, a third insulating layer 540 is formed, and a planarization layer 550 is formed on the third insulating layer 540. The third insulating layer 540 and a portion of the planarization layer 550 are etched, and a first electrode 620 is formed in a predetermined pattern on the planarization layer 550 such that the drain electrode 610 and the first electrode 620 contact each other. A transparent second substrate 680 is manufactured separately from the first substrate 505, and a color filter layer 670 is formed on a bottom surface 680a of the second substrate 680. A second electrode 660 is formed on a bottom surface 670a of the color filter layer 670, and a first alignment layer 630 and a second alignment layer 650 which are used to align molecules of liquid crystal in a liquid crystal layer 640 are respectively formed on surfaces of the first and second electrodes 620 and 660 that face each other. A first polarizing layer 500 is formed on a bottom surface of the first substrate 505, and a second polarizing layer 690 is formed on a top surface 680b of the second substrate 680. A protective film 695 is formed on a top surface 690a of the second polarizing layer 690. A spacer 560 that defines the liquid crystal layer 640 is interposed between the color filter layer 670 and the planarization layer 550.

A potential difference is generated between the first electrode 620 and the second electrode 660 by an external signal which is controlled by the gate electrode 590, the source electrode 570, and the drain electrode 610. The potential difference determines the alignment of the liquid crystal layer 640, and the visible light V supplied to the BLU 130 is blocked or transmitted according to the alignment of the liquid crystal layer 640. When the visible light V transmitted through the liquid crystal layer 640 passes through the color filter layer 670, it becomes colored, thereby forming an image.

The LCD panel 700 (in particular, a TFT-LCD) is illustrated in FIG. 20 as an example. However, a display panel used in the flat display apparatus of the present invention is not limited thereto. Various non-emissive display panels can be used in the flat display apparatus of the present invention.

The flat display apparatus which includes the electron emission device as a BLU can produce an image with enhanced brightness and have a longer lifespan than a conventional flat display apparatus as a result of an increase in the brightness and lifetime of the BLU.

As described above, according to the present invention, auxiliary electrodes extend toward an anode. Therefore, the auxiliary electrodes can prevent an electric field created by the anode from interfering with an electric field between a first electrode (cathode) and a second electrode (gate electrode). Therefore, the anode and the gate electrode can be easily controlled to accelerate and emit electrons, thereby maximizing luminous uniformity and luminous efficiency of a phosphor.

According to the present invention, the auxiliary electrode portions having a predetermined shape and enabling an electron emission source to emit electrons extend from the first and second electrodes and surface areas of the auxiliary electrode portions facing each other are maximized. Accordingly, the electron emission source can be installed in a larger area, which results in an increase in electron emission efficiency.

When a BLU includes the electron emission device according to the present invention, the brightness and luminous efficiency of a display apparatus using the BLU can be enhanced.

## Claims

1. An electron emission device (101) comprising:
a base substrate (110);
at least one first electrode (120) each including a first main electrode portion (121) arranged on a surface of the base substrate (110) and extending in a predetermined direction and a first auxiliary electrode (123) extending from the first main electrode portion (121);
at least one second electrode (130) each including a second main electrode portion (131) arranged on the surface of the base substrate (110) and separated from the first electrode (120) and extending in a predetermined direction and a second auxiliary electrode (133) extending from the second main electrode portion (131); and
an electron emission source (150) arranged on at least one of the first and second electrodes (120, 130),
**characterized in that**
the first and second auxiliary electrodes (123, 133) each have a spiral pattern in which a radius of curvature of the first and second auxiliary electrodes (123, 133) are gradually reduced, or
the first and second auxiliary electrodes (123, 133) each have a bent pattern in which lengths of sides of each of the first and second auxiliary electrodes (123, 133) are gradually reduced, and
wherein a constant distance is maintained between the first and second auxiliary electrodes (123, 133).

2. The electron emission device of claim 1, wherein the first and second auxiliary electrodes (123, 133) are respectively arranged on at least a portion of the first and second electrodes (120, 130) and are adapted to block an external electric field from affecting an electric field between the first and second electrodes (120, 130).

3. The electron emission device of claim 2, wherein the first and second auxiliary electrodes (123, 133) are respectively arranged on all of the first and second electrodes (120, 130).

4. The electron emission device according to at least one of the previous claims, wherein the first and second auxiliary electrodes (123, 133) are thicker than the first and second electrodes (120, 130).

5. The electron emission device of claim 2, further comprising an insulating layer interposed between the first and second auxiliary electrodes (123, 133) and portions of the first and second electrodes (120, 130) on which the first and second auxiliary electrodes (123, 133) are respectively arranged.

6. The electron emission device of at least one of the previous claims, wherein the first and second auxiliary electrodes (123, 133) each have a right-angled pattern in which adjacent sides of each of the first and second auxiliary electrodes (123, 133) are perpendicular to each other.

7. The electron emission device according to at least one of the previous claims, wherein a shortest distance between the first main electrode portion (121) and the second auxiliary electrode (133) is equal to a distance between the first and second auxiliary electrodes (123, 133) and/or wherein a shortest distance between the second main electrode (131) portion and the first auxiliary electrode (123) is equal to a distance between the first and second auxiliary electrodes (123, 133).

8. The electron emission device according to at least one of the previous claims, wherein the electron emission source (150) is disposed on only a portion of either the first or second electrodes (120, 130).

9. The electron emission device according to at least one of the previous claims, wherein the first and second electrodes (120, 130) have surfaces facing each other and wherein the electron emission source (150) is disposed on one of the surfaces of the first and second electrodes (120, 130) facing each other.

10. The electron emission device according to at least one of the previous claims, wherein a distance between either an end of the electron emission source (150) on one of the first and second electrodes (120, 130) and the other of the first and second electrodes (120, 130) or another electron emission source (150) which faces and is separated from the electron emission source (150) is in a range of 1.0 nm to 0.01 µm.

11. The electron emission device according to at least one of the previous claims, wherein a portion of the base substrate (110) occupied by the electron emission source (150) is in a range of 0.0001 to 50.0% of a portion of the base substrate (110) occupied by the first and second electrodes (120, 130) and a space between the first and second electrodes (120, 130).

12. A backlight unit (BLU) (1000) comprising:
an electron emission device (101) according to any of the claims 1 to 11 having a plurality of first electrodes (120) and a plurality of second electrodes (130); and
a phosphor layer (70) arranged in front of a base substrate (110) of the electron emission device (101), the phosphor layer (70) excited by electrons emitted from the electron emission source (150) of the electron emission device (101) in response to an electric field between the first and second electrodes (120, 130) to generate visible light.

13. The BLU of claim 12, wherein the first main electrode portions (121) and the second main electrode portions (131) of the electron emission device (101) are arranged alternately and parallel to each other on the base substrate (110), the first auxiliary electrodes (123) extend from one side of each of the first main electrode portions (121), and the second auxiliary electrodes (133) extend from one side of each of the second main electrode portions (131).

14. The BLU of claim 12, wherein the first main electrode portions (121) and the second main electrode portions (131) are arranged alternately and parallel to each other on the base substrate (110), the first auxiliary electrodes (123) extend from both sides of the first main electrode portions (121), and the second auxiliary electrodes (133) extend from both sides of the second main electrode portions (131).

15. The BLU of claim 12, further comprising:
a front substrate (90) arranged parallel to the base substrate (110); and
an anode (80) arranged behind the front substrate (90) to accelerate electrons emitted from the electron emission source (150) toward the phosphor layer (70).

16. A flat display apparatus comprising:
a backlight unit (BLU) (1000) according to any of the claims 12 to 15; and
a display panel (700) including a light receiving/generating device arranged in front of the BLU (1000) and displaying an image by controlling light supplied from the BLU (1000).

17. The apparatus of claim 16, wherein the light receiving/generating device comprises a liquid crystal device.

18. A method of driving an electron emission device (101) according to any of the claims 1 to 11, the method comprising:
alternately supplying positive and negative voltages to the first and second electrodes (120, 130) by:
supplying the negative voltage to one of the first and second electrodes (120, 130) for a predetermined period of time while supplying the positive voltage to the other of the first and second electrodes (120, 130) for the predetermined period of time; and
supplying the positive voltage to the one of the first and second electrodes (120, 130) for a predetermined period of time while supplying the negative voltage to the other of the first and second electrodes (120, 130);
wherein the first and second electrodes (120, 130) alternately function as a cathode of the electron emission device (101).

## Patentansprüche

1. Eine Elektronenemissionsvorrichtung (101), umfassend:
ein Basissubstrat (110);
mindestens eine erste Elektrode (120), deren jede einen ersten Hauptelektrodenteil (121), der auf einer Oberfläche des Basissubstrats (110) angeordnet ist und sich in einer vorbestimmten Richtung erstreckt, sowie eine erste Zusatzelektrode (123), die sich von dem ersten Hauptelektrodenteil (121) erstreckt, beinhaltet;
mindestens eine zweite Elektrode (130), deren jede einen zweiten Hauptelektrodenteil (131), der auf der Oberfläche des Basissubstrats (110) angeordnet ist und von der ersten Elektrode (120) getrennt ist und sich in einer vorbestimmten Richtung erstreckt, sowie eine zweite Zusatzelektrode (133), die sich von dem zweiten Hauptelektrodenteil (131) erstreckt, beinhaltet; und
eine Elektronenemissionsquelle (150), die auf mindestens einer der ersten und zweiten Elektroden (120, 130) angeordnet ist,
**dadurch gekennzeichnet, dass**
die ersten und zweiten Zusatzelektroden (123, 133) jeweils ein spiralförmiges Muster aufweisen, in dem ein Krümmungsradius der ersten und zweiten Zusatzelektroden (123, 133) sich graduell verringert, oder
die ersten und zweiten Zusatzelektroden (123, 133) jeweils ein gebogenes Muster aufweisen, in dem Längen von Seiten jeder der ersten und zweiten Zusatzelektroden (123, 133) sich graduell verringern, oder
wobei zwischen den ersten und zweiten Zusatzelektroden (123, 133) ein konstanter Abstand beibehalten ist.

2. Die Elektronenemissionsvorrichtung nach Anspruch 1, wobei die ersten und zweiten Zusatzelektroden (123, 133) auf mindestens einem Teil der ersten beziehungsweise zweiten Elektroden (120, 130) angeordnet sind und dazu ausgelegt sind, zu verhindern, dass ein externes elektrisches Feld ein elektrisches Feld zwischen den ersten und zweiten Elektroden (120, 130) beeinflusst.

3. Die Elektronenemissionsvorrichtung nach Anspruch 2, wobei die ersten und zweiten Zusatzelektroden (123, 133) auf allen der ersten beziehungsweise zweiten Elektroden (120, 130) angeordnet sind.

4. Die Elektronenemissionsvorrichtung gemäß mindestens einem der vorhergehenden Ansprüche, wobei die ersten und zweiten Zusatzelektroden (123, 133) dicker als die ersten und zweiten Elektroden (120, 130) sind.

5. Die Elektronenemissionsvorrichtung nach Anspruch 2, ferner umfassend eine Isolierschicht, die zwischen den ersten und zweiten Zusatzelektroden (123, 133) und Teilen der ersten und zweiten Elektroden (120, 130), auf denen die ersten beziehungsweise zweiten Zusatzelektroden (123, 133) angeordnet sind, eingefügt ist.

6. Die Elektronenemissionsvorrichtung nach mindestens einem der vorhergehenden Ansprüche, wobei die ersten und zweiten Zusatzelektroden (123, 133) jeweils ein rechtwinkliges Muster aufweisen, in dem benachbarte Seiten jeder der ersten und zweiten Zusatzelektroden (123, 133) senkrecht zueinander sind.

7. Die Elektronenemissionsvorrichtung nach mindestens einem der vorhergehenden Ansprüche, wobei ein kürzester Abstand zwischen dem ersten Hauptelektrodenteil (121) und der zweiten Zusatzelektrode (133) gleich einem Abstand zwischen den ersten und zweiten Zusatzelektroden (123, 133) ist und/oder wobei ein kürzester Abstand zwischen dem zweiten Hauptelektrodenteil (131) und der ersten Zusatzelektrode (123) gleich einem Abstand zwischen den ersten und zweiten Zusatzelektroden (123, 133) ist.

8. Die Elektronenemissionsvorrichtung gemäß mindestens einem der vorhergehenden Ansprüche, wobei die Elektronenemissionsquelle (150) auf lediglich einem Teil entweder der ersten oder zweiten Elektroden (120, 130) angeordnet ist.

9. Die Elektronenemissionsvorrichtung gemäß mindestens einem der vorhergehenden Ansprüche, wobei die ersten und zweiten Elektroden (120, 130) einander zugewandte Oberflächen aufweisen und wobei die Elektronenemissionsquelle (150) auf einer der einander zugewandten Oberflächen der ersten und zweiten Elektroden (120, 130) angeordnet ist.

10. Die Elektronenemissionsvorrichtung gemäß mindestens einem der vorhergehenden Ansprüche, wobei ein Abstand zwischen entweder einem Ende der Elektronenemissionsquelle (150) auf einer der ersten und zweiten Elektroden (120, 130) und der anderen der ersten und zweiten Elektroden (120, 130) oder einer weiteren Elektronenemissionsquelle (150), die der Elektronenemissionsquelle (150) zugewandt ist und von ihr getrennt ist, zwischen 1,0 nm und 0,01 µm beträgt.

11. Die Elektronenemissionsvorrichtung gemäß mindestens einem der vorhergehenden Ansprüche, wobei ein von der Elektronenemissionsquelle (150) eingenommener Teil des Basissubstrats (110) zwischen 0,0001 und 50,0% eines von den ersten und zweiten Elektroden (120, 130) und einem Zwischenraum zwischen den ersten und zweiten Elektroden (120, 130) eingenommenen Teils des Basissubstrats (110) beträgt.

12. Eine Hintergrundbeleuchtungseinheit (BLU) (1000), umfassend:
eine Elektronenemissionsvorrichtung (101) gemäß irgendeinem der Ansprüche 1 bis 11 mit einer Vielzahl von ersten Elektroden (120) und einer Vielzahl von zweiten Elektroden (130); und
eine vor einem Basissubstrat (110) der Elektronenemissionsvorrichtung (101) angeordnete Leuchtstoffschicht (70), wobei die Leuchtstoffschicht (70) von Elektronen, die von der Elektronenemissionsquelle (150) der Elektronenemissionsvorrichtung (101) in Reaktion auf ein elektrisches Feld zwischen den ersten und zweiten Elektroden (120, 130) emittiert werden, angeregt wird, um sichtbares Licht zu erzeugen.

13. Die BLU nach Anspruch 12, wobei die ersten Hauptelektrodenteile (121) und die zweiten Hauptelektrodenteile (131) der Elektronenemissionsvorrichtung (101) abwechselnd und parallel zueinander auf dem Basissubstrat (110) angeordnet sind, sich die ersten Zusatzelektroden (123) von einer Seite jedes der ersten Hauptelektrodenteile (121) erstrecken und sich die zweiten Zusatzelektroden (133) von einer Seite jedes der zweiten Hauptelektrodenteile (131) erstrecken.

14. Die BLU nach Anspruch 12, wobei die ersten Hauptelektrodenteile (121) und die zweiten Hauptelektrodenteile (131) abwechselnd und parallel zueinander auf dem Basissubstrat (110) angeordnet sind, sich die ersten Zusatzelektroden (123) von beiden Seiten der ersten Hauptelektrodenteile (121) erstrecken und sich die zweiten Zusatzelektroden (133) von beiden Seiten der zweiten Hauptelektrodenteile (131) erstrecken.

15. Die BLU nach Anspruch 12, ferner umfassend:
ein vorderes Substrat (90), das parallel zu dem Basissubstrat (110) angeordnet ist; und
eine Anode (80), die hinter dem vorderen Substrat (90) angeordnet ist, um von der Elektronenemissionsquelle (150) emittierte Elektronen in Richtung der Leuchtstoffschicht (70) zu beschleunigen.

16. Eine flache Anzeigevorrichtung, umfassend:
eine Hintergrundbeleuchtungseinheit (BLU) (1000) gemäß irgendeinem der Ansprüche 12 bis 15; und
eine Anzeigetafel (700) mit einer Licht empfangenden/erzeugenden Vorrichtung, die vor der BLU (1000) angeordnet ist und durch Steuern von von der BLU (1000) geliefertem Licht ein Bild anzeigt.

17. Die Vorrichtung nach Anspruch 16, wobei die Licht empfangende/erzeugende Vorrichtung eine Flüssigkristallvorrichtung umfasst.

18. Ein Verfahren zum Ansteuern einer Elektronenemissionsvorrichtung (101) gemäß irgendeinem der Ansprüche 1 bis 11, wobei das Verfahren Folgendes umfasst:
abwechselndes Anlegen positiver und negativer Spannungen an die ersten und zweiten Elektroden (120, 130) durch:
Anlegen der negativen Spannung an eine der ersten und zweiten Elektroden (120, 130) für eine vorbestimmte Zeitdauer während an die andere der ersten und zweiten Elektroden (120, 130) für die vorbestimmte Zeitdauer die positive Spannung angelegt wird; und
Anlegen der positiven Spannung an die eine der ersten und zweiten Elektroden (120, 130) für eine vorbestimmte Zeitdauer während an die andere der ersten und zweiten Elektroden (120, 130) die negative Spannung angelegt wird;
wobei die ersten und zweiten Elektroden (120, 130) abwechselnd als Kathode der Elektronenemissionsvorrichtung (101) fungieren.

## Revendications

1. Dispositif d'émission d'électrons (101) comprenant :
un substrat de base (110) ;
au moins une première électrode (120), comportant chacune une première partie d'électrode principale (121) agencée sur une surface du substrat de base (110) et s'étendant dans une direction prédéterminée et une première électrode auxiliaire (123) s'étendant à partir de ladite première partie d'électrode principale (121) ;
au moins une deuxième électrode (130), comportant chacune une deuxième partie d'électrode principale (131) agencée sur la surface du substrat de base (110) et séparée de la première électrode (120) et s'étendant dans une direction prédéterminée et une deuxième électrode auxiliaire (133) s'étendant à partir de la deuxième partie d'électrode principale (121) ; et
une source d'émission d'électrons (150) agencée sur au moins l'une des premières et deuxièmes électrodes (120, 130),
**caractérisé en ce que**
les premières et deuxièmes électrodes auxiliaires (123, 133) ont chacune un motif en spirale dans lequel les rayons de courbure des premières et deuxièmes électrodes auxiliaires (123, 133) diminuent progressivement, ou
les premières et deuxièmes électrodes auxiliaires (123, 133) ont chacune un motif coudé dans lequel les longueurs des côtés de chacune des premières et deuxièmes électrodes auxiliaires (123, 133) diminuent progressivement, et
dans lequel une distance constante est maintenue entre les premières et deuxièmes électrodes auxiliaires (123, 133).

2. Dispositif d'émission d'électrons selon la revendication 1, dans lequel les premières et deuxièmes électrodes auxiliaires (123, 133) sont respectivement agencées sur au moins une partie des premières et deuxièmes électrodes (120, 130) et sont aptes à empêcher un champ électrique externe d'affecter un champ électrique entre les premières et deuxièmes électrodes (120, 130).

3. Dispositif d'émission d'électrons selon la revendication 2, dans lequel les premières et deuxièmes électrodes auxiliaires (123, 133) sont respectivement agencées sur la totalité des premières et deuxièmes électrodes (120, 130).

4. Dispositif d'émission d'électrons selon au moins l'une des revendications précédentes, dans lequel les premières et deuxièmes électrodes auxiliaires (123, 133) sont plus épaisses que les premières et deuxièmes électrodes (120, 130).

5. Dispositif d'émission d'électrons selon la revendication 2, comprenant en outre une couche isolante interposée entre les premières et deuxièmes électrodes auxiliaires (123, 133) et des parties des premières et deuxièmes électrodes (120, 130) sur lesquelles les premières et deuxièmes électrodes auxiliaires (123, 133) sont respectivement agencées.

6. Dispositif d'émission d'électrons selon au moins l'une des revendications précédentes, dans lequel les premières et deuxièmes électrodes auxiliaires (123, 133) ont chacune un motif à angle droit dans lequel les côtés adjacents de chacune des premières et deuxièmes électrodes auxiliaires (123, 133) sont perpendiculaires les uns aux autres.

7. Dispositif d'émission d'électrons selon au moins l'une des revendications précédentes, dans lequel la distance la plus courte entre la première partie d'électrode principale (121) et la deuxième électrode auxiliaire (133) est égale à la distance entre les premières et deuxièmes électrodes auxiliaires (123, 133) et/ou dans lequel la distance la plus courte entre la deuxième partie d'électrode principale (131) et la première électrode auxiliaire (123) est égale à la distance entre les premières et deuxièmes électrodes auxiliaires (123, 133).

8. Dispositif d'émission d'électrons selon au moins l'une des revendications précédentes, dans lequel la source d'émission d'électrons (150) n'est disposée que sur une partie, soit des premières, soit des deuxièmes électrodes (120, 130).

9. Dispositif d'émission d'électrons selon au moins l'une des revendications précédentes, dans lequel les premières et deuxièmes électrodes (120, 130) ont des surfaces en face les unes des autres et dans lequel la source d'émission d'électrons (150) est disposée sur l'une des surfaces des premières et deuxièmes électrodes (120, 130) qui sont en face l'une de l'autre.

10. Dispositif d'émission d'électrons selon au moins l'une des revendications précédentes, dans lequel la distance entre l'une ou l'autre des extrémités de la source d'émission d'électrons (150) se trouvant sur l'une des premières et deuxièmes électrodes (120, 130) et de celle se trouvant sur l'autre des premières et deuxièmes électrodes (120, 130), ou une autre source d'émission d'électrons (150) qui est en face et séparée de la source d'émission d'électrons (150), est dans la gamme de 1,0 nm à 0,01 µm.

11. Dispositif d'émission d'électrons selon au moins l'une des revendications précédentes, dans lequel une partie du substrat de base (110) occupée par la source d'émission d'électrons (150) est dans un intervalle de 0,0001 à 50,0 % d'une partie du substrat de base (110) occupée par les premières et deuxièmes électrodes (120, 130) et par un espace compris entre les premières et deuxièmes électrodes (120, 130).

12. Unité de rétroéclairage (BLU) (1000) comprenant :
un dispositif d'émission d'électrons (101) selon l'une quelconque des revendications 1 à 11 comportant une pluralité de premières électrodes (120) et une pluralité de deuxièmes électrodes (130) ; et
une couche de luminophore (70) agencée en face d'un substrat de base (110) du dispositif d'émission d'électrons (101), la couche de luminophore (70) étant excitée par des électrons émis par la source d'émission d'électrons (150) du dispositif d'émission d'électrons (101) en réponse à un champ électrique entre les premières et deuxièmes électrodes (120, 130), afin de générer de la lumière visible.

13. Unité de rétroéclairage (BLU) selon la revendication 12, dans laquelle les premières parties d'électrodes principales (121) et les deuxièmes parties d'électrodes principales (131) du dispositif d'émission d'électrons (101) sont agencées en alternance et parallèlement les unes aux autres sur le substrat de base (110), les premières électrodes auxiliaires (123) s'étendant à partir d'un côté de chacune des premières parties d'électrodes principales (121), et les deuxièmes électrodes auxiliaires (133) s'étendant à partir d'un côté de chacune des deuxièmes parties d'électrodes principales (131).

14. Unité de rétroéclairage (BLU) selon la revendication 12, dans laquelle les premières parties d'électrodes principales (121) et les deuxièmes parties d'électrodes principales (131) sont agencées en alternance et parallèlement les unes aux autres sur le substrat de base (110), les premières électrodes auxiliaires (123) s'étendant à partir des deux côtés des premières parties d'électrodes principales (121), et les deuxièmes électrodes auxiliaires (133) s'étendant à partir des deux côtés des deuxièmes parties d'électrodes principales (131).

15. Unité de rétroéclairage (BLU) selon la revendication 12, comprenant en outre :
un substrat avant (90) agencé parallèlement au substrat de base (110) ; et
une anode (80) agencée derrière la surface avant (90) de manière à accélérer les électrons émis par la source d'émission d'électrons (150) vers la couche de luminophore (70).

16. Appareil d'affichage plat comprenant :
une unité de rétroéclairage (BLU) (1000) selon l'une quelconque des revendications 12 à 15 ; et
un panneau d'affichage (700) comportant un dispositif récepteur/générateur de lumière agencé en face de la BLU (1000) et affichant une image en commandant la lumière délivrée par la BLU (1000).

17. Appareil selon la revendication 16, dans lequel le dispositif récepteur/générateur de lumière comprend un dispositif à cristaux liquides.

18. Procédé d'attaque d'un dispositif d'émission d'électrons (101) selon l'une quelconque des revendications 1 à 11, le procédé consistant à :
délivrer en alternance des tensions positives et négatives aux premières et deuxièmes électrodes (120, 130) :
délivrer la tension négative à l'une des premières et deuxièmes électrodes (120, 130) pendant une période de temps prédéterminée tout en délivrant la tension positive à l'autre des premières et deuxièmes électrodes (120, 130) pendant la période de temps prédéterminée ; et
délivrer la tension positive à l'une des premières et deuxièmes électrodes (120, 130) pendant une période de temps prédéterminée tout en délivrant la tension négative à l'autre des premières et deuxièmes électrodes (120, 130) ;
dans lequel les premières et deuxièmes électrodes (120, 130) fonctionnent en alternance en tant que cathode du dispositif d'émission d'électrons (101).
